# EUROPEAN PATENT APPLICATION

(11) **EP 4 279 817 A1**
(43) Date of publication of application: **22.11.2023**
(21) Application number: 23173795.8
(22) Date of filing: 16.05.2023
(51) Int. Cl.: F24C 7/08, E05B 65/00, F24C 15/02

(54) **TWO-STEP DOOR OPENING COMBINATION**

(30) Priority: 19.05.2022 CN 202210553649
(71) Applicant: Whirlpool Corporation, Benton Harbor, MI 49022 (US)
(72) Inventor: Chen, Yecai, 21024 Cassinetta di Biandronno (VA) (IT); Evens, Brian C., 21024 Cassinetta di Biandronno (VA) (IT); Guo, Hua, 21024 Cassinetta di Biandronno (VA) (IT); Kunst, Benjamin T., 21024 Cassinetta di Biandronno (VA) (IT); Lai, Charles Tat Kan, 21024 Cassinetta di Biandronno (VA) (IT); Liu, Yu J., 21024 Cassinetta di Biandronno (VA) (IT); Sughroue, Gerald Lee, 21024 Cassinetta di Biandronno (VA) (IT); Yu, Tingting, 21024 Cassinetta di Biandronno (VA) (IT)
(74) Representative: PGA S.p.A.

(57) **Abstract**

A two-step door opening mechanism (110) for an oven (100) is provided. The mechanism includes first and second buttons (112, 114), arranged side-by-side on a front panel of the oven (100), the oven (100) defining an oven cavity (106) openable and closable by an oven door (104), the first and second buttons (112, 114) being separately actuatable one after the other for providing two distinct actions to be performed to open the oven door (104). The first button (112), once actuated, is operable to unlock the second button (114), and the second button (114), once actuated, is operable to open the door (104) when the second button (114) is unlocked.

## Description

### FIELD OF DISCLOSURE

Aspects of the disclosure relate to appliances, and more particularly, to ovens that implement a two-step side-by-side button mechanism for access to the oven cavity.

### DESCRIPTION OF RELATED ART

Ovens are kitchen appliances that are used to cook food. A door may provide access to the oven cavity when open and seal the oven cavity for cooking when closed. A door opener mechanism may be provided to allow the user to open the door. In many examples, this mechanism includes a single button that, when pressed into the face of the oven, pushes upon an internal mechanism to unlatch and push the door outward towards the user.

### SUMMARY

A single step door opener mechanism may be easy for a user to operate but may lack child resistance. Aspects of the disclosure describe a two-step mechanism to allow for the operation of the oven door. In an example, two buttons may be located side-by-side on the front face of the oven. In the two-step mechanism, two distinct actions may be required of the user to open the door to the oven cavity. To open the oven door, a first of the two buttons is pressed. By pressing the first button, a second of the two buttons may become unlocked and operable to open the door. Then, while the first button remains pressed, the second of the two buttons is pressed. The oven door is not opened if both buttons are simultaneously pressed. Additionally, the oven door is not opened if the first button is pressed, released, and then the second button is pressed. That is, the oven door is not openable until both buttons are actuated in sequence one after the other.

Child resistance is offered by the two distinct actions of the two-step mechanism. Moreover, ease of actuation is maintained by both buttons being placed on the front face of the oven. Thus, the instant disclosure provides the advantage of having child lock capabilities, as well as providing both buttons as being within easy reach for an adult user on the front face of the appliance. Further aspects of the disclosure are discussed in detail herein.

In one or more embodiments, a two-step door opening mechanism for an oven is provided. The mechanism includes first and second buttons, arranged side-by-side on a front panel of the oven, the oven defining an oven cavity openable and closable by an oven door, the first and second buttons being separately actuatable one after the other for providing two distinct actions to be performed to open the oven door. The first button, once actuated, is operable to unlock the second button, and the second button, once actuated, is operable to open the door when the second button is unlocked.

In one or more embodiments, the first button is marked with a first indication specifying that a first of the two distinct actions is to be performed first to the first button, and the second button is marked with a second indication specifying that a second of the two distinct actions is to be performed second to the to the second button.

In one or more embodiments, the first of the two distinct actions is pressing the first button, and the second of the two distinct actions is pressing the second button while the first button remains pressed.

In one or more embodiments, each of the first and second buttons are biased outward into an unpressed position.

In one or more embodiments, the mechanism further includes a blocking slider configured to slide laterally between a first, locked position in which the blocking slider prevents inward movement of the second button and a second, unlocked position in which the blocking slider allows the inward movement of the second button.

In one or more embodiments, pressing of the first button moves the blocking slider from the first, locked position to the second, unlocked position, and releasing of the first button moves the blocking slider from the second, unlocked position back to the first, locked position.

In one or more embodiments, the second button includes an elongate shaft extending inwards into the oven; and a key cap at a first end of the elongate shaft facing the exterior of the oven, wherein when the second button is pressed inwards and the blocking slider is in the second, unlocked position, a second end of the elongate shaft comes into contact with and pushes a door-opening mechanism to cause the oven door of the oven to open.

In one or more embodiments, the first button includes an elongate shaft extending inwards into the oven, a key cap at a first end of the elongate shaft facing the exterior of the oven, and the blocking slider define an elongate member perpendicular to the elongate shafts.

In one or more embodiments, when the second button is pressed inwards and the blocking slider is in the first, locked position, the blocking slider is located at least partially behind the key cap, such that the second button is stopped against the surface of the blocking slider and be unable to proceed inward to come into contact with the door-opening mechanism.

In one or more embodiments, pressing the first button actuates a solenoid to move the blocking slider from the first, locked position to the second, unlocked position, and releasing the first button releases the solenoid to move the blocking slider from the second, unlocked position back to the first, locked position.

In one or more embodiments, the mechanism further includes a processor programmed to actuate a door-opening mechanism to open the door responsive to a user pressing the first button and then pressing the second button while the first button remains pressed.

In one or more embodiments, an oven includes the two-step door opening mechanism.

In one or more embodiments, a method for utilizing a two-step door opening mechanism including first and second buttons arranged side-by-side on a front panel of an oven, the first and second buttons being separately actuatable one after the other for providing two distinct actions to be performed to open an oven door, comprises actuating the first button to unlock the second button; and once unlocked, actuating the second button to open the oven door.

In one or more embodiments, the method further includes pressing a first button to slide a blocking slider from a first, locked position into a second, unlocked position, wherein in the first, locked position the blocking slider prevents inward movement of the second button and in the second, unlocked position the blocking slider allows the inward movement of the second button; and pressing the second button, when the blocking slider is in the second, unlocked position, to cause a door-opening mechanism to open the oven door.

### BRIEF DESCRIPTION OF THE DRAWINGS

FIG. 1 illustrates a front view of an oven having a two-step door opening mechanism;
FIG. 2 illustrates a perspective view closeup of the controls of the two-step door opening mechanism;
FIG. 3A illustrates an example of a user attempting to press the second button without pressing the first button;
FIG. 3B illustrates an example of a press of the first button of the two-step door opening mechanism;
FIG. 3C illustrates an example of a press of the second button of the two-step door opening mechanism while the first button is pressed;
FIG. 3D illustrates an example of the opening of the door responsive to the press of the second button while the first button is being pressed;
FIG. 4 illustrates an example implementation of the two-step door opening mechanism utilizing a blocking slider with the first and second buttons unpressed;
FIG. 5 illustrates an example implementation of the two-step door opening mechanism utilizing a blocking slider with the first button pressed and the second button unpressed; and
FIG. 6 illustrates an example implementation of the two-step door opening mechanism utilizing a blocking slider with the second button being pressed while the first button is pressed.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

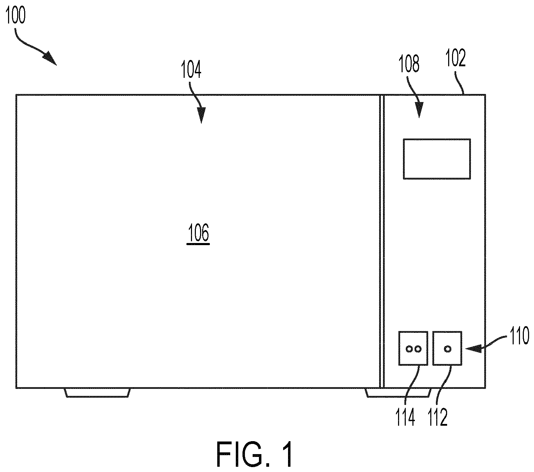

FIG. 1 illustrates an example front view of an oven 100 having a two-step door opening mechanism 110. The oven 100 may be of various types, such as a conventional oven, a microwave oven, or a combination microwave oven. The oven 100 generally has a housing 102 that defines an oven cavity 106. The oven cavity 106 generally has a back wall, a top wall, a bottom wall, and a pair of opposing side walls. The oven 100 also includes a door 104 to the oven cavity 106. The door 104 may include a latch mechanism to lock the door 104 in a closed position during oven operation. Thus, as explained in detail herein, the two-step door opening mechanism 110 may be used to allow the door 104 to the oven cavity 106 to be opened.

A control panel 108 may also be provided on the front face of the oven 100. The control panel 108 may include controls that, when operated by a user, allow for the user to select one or more modes of operation for the oven 100. The control panel 108 may include a knob, button, or other control for controlling the operation of the oven 100. The control panel 108 may accordingly allow a user to select different levels of cooking. The control panel 108 may also include one or more display elements such as light emitting diodes (LEDs),

The two-step door opening mechanism 110 may be configured to allow a user to perform two distinct actions to open the door 104 to the oven cavity 106. In an example, the two-step door opening mechanism 110 may include a first button 112 and a second button 114. The first button 112 and the second button 114 as shown are both located on the front face of the housing 102. In many examples, this may include the first button 112 and second button 114 being located side-by-side on the front face of the oven 100. In some single button designs, the front face of the oven 100 may include a single rectangular button that, when actuated by a user, allows the user to open the door 104. In many two-step door opening mechanism 110, the first button 112 and the second button 114 may collectively define the same rectangular area as is typically used in single rectangular button designs.

In the two-step mechanism, two distinct actions may be required of the user to open the door 104 to the oven cavity 106. In an example, the first distinct action may be pressing the first button 112, and the second distinct action may be pressing the second button 114 while the first button 112 remains pressed. More specifically, to begin to open the oven door 104, the first button 112 is pressed. By pressing the first button 112, the second button 114 becomes operable to open the door 104. Then, while the first button 112 remains pressed, the second button 114 is pressed. The door 104 may not be opened if both the first button 112 and the second button 114 are simultaneously pressed. Additionally, the oven door 104 is not opened if the first button 112 is pressed, released, and then the second button 114 is pressed.

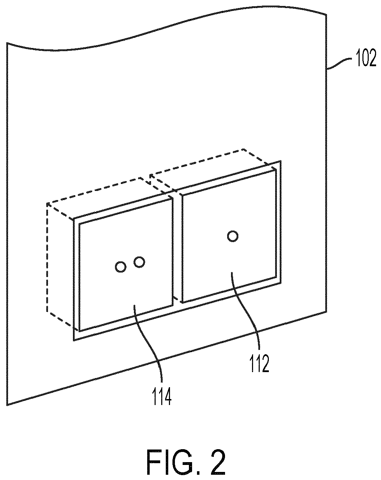

FIG. 2 illustrates a perspective closeup view of the controls of the two-step door opening mechanism 110. As can be seen, the first button 112 is marked with an indication that the first of the two distinct actions is to be performed first to the first button 112, and the second button 114 is marked with an indication that the second of the two distinct actions is to be performed second to the to the second button 114. In one example, the first button 112 may be marked with a single dot, protrusion, or indentation, while the second button 114 may be marked with two dots, two protrusions, or two indentations. In another example, the first button 112 may be marked with the number "1", and the second button 114 may be marked with the number "2".

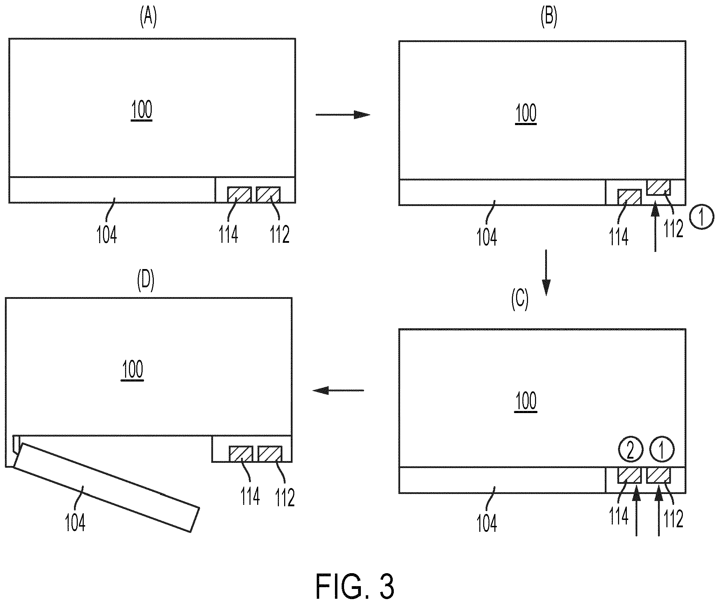

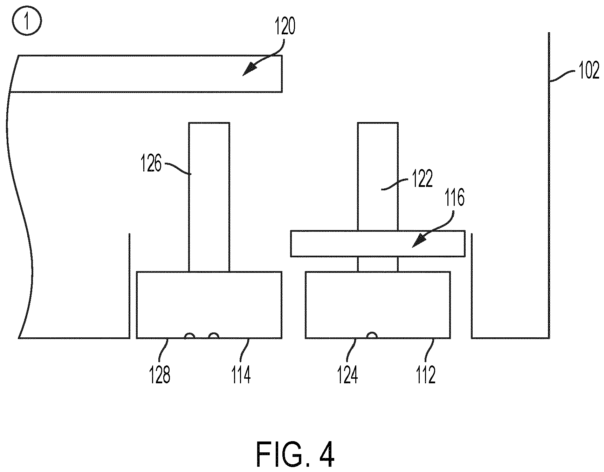

FIG. 3A illustrates an example of a user attempting to press the second button 114 without pressing the first button 112. As indicated by the X over the user's hand, the second button 114 is immovable when the first button 112 is not first pressed in. Further aspects of the locking and unlocking of movement of the second button 114 in relation to actuation of the first button 112 are discussed in detail with respect to FIGS. 4-6.

FIG. 3B illustrates an example of a press of the first button 112 of the two-step door opening mechanism 110. As shown, the user has pressed the first button 112. At this point, the second button 114 has not yet been pressed. However, the pressing of the first button 112 has allowed the second button 114 to be unlocked and movable to be pressed.

FIG. 3C illustrates an example of a press of the second button 114 of the two-step door opening mechanism 110 while the first button 112 is pressed. As the second button 114 is moveable, the second button 114 may be pressed inward to engage the door-opening mechanism to open the door 104. At this point, both the first button 112 and the second button 114 have been pressed.

FIG. 3D illustrates an example of the opening of the door 104 responsive to the press of the second button 114 while the first button 112 is being pressed. Accordingly, by performing the two distinct actions to the two-step door opening mechanism 110, the user has opened the door 104 to gain access to the oven cavity 106.

FIG. 4 illustrates an example implementation of the two-step door opening mechanism 110 utilizing a blocking slider 116. In FIG. 4, the first button 112 and the second button 114 are both in an unpressed state or position. This may be the default position for the first button 112 and the second button 114, as the first button 112 and the second button 114 may each be biased outward into the unpressed position, e.g., using springs or other biasing elements (not shown).

In an example, the first button 112 may define an elongate shaft 122 onto which a key cap 124 is attached at a front end facing the exterior of the oven 100. The key cap 124 may be pressable inward into the oven 100 to actuate the first button 112. The second button 114 may similarly define an elongate shaft 126 onto which a key cap 128 is attached that may be pressed by the user to actuate the second button 114. A spring (not shown) may, in one example, be placed around each of the elongate shafts 122, 166 to bias the key caps 124, 128 into the unpressed position. The key cap 124 may include the indication that the first button 112 is to be operated first, and the key cap 128 may include the indication that the second button 114 is to be operated second (as discussed above).

The blocking slider 116 may be configured to slide between a first, locked position in which the blocking slider 116 prevents inward movement of the second button 114 and a second, unlocked position in which the blocking slider 116 allows inward movement of the second button 114. In an example, the blocking slider 116 may define an elongate member perpendicular to the elongate shafts 122 and 126. When in the locked position, the blocking slider 116 may extend behind the key cap 128, such that the second button 114 may not be pressed inwards. When in the unlocked position, the blocking sliders 116 may slide laterally away from the key cap 128, freeing the inward movement of the second button 114.

As shown in FIG. 4, when the first button 112 is unpressed, the blocking slider 116 may be operational to prevent inward movement of the second button 114 when the first button 112 is in the unpressed state. For example, an end of blocking slider 116 in the locked position may be located behind the key cap 128, such that the second button 114 may be stopped against the surface of the blocking slider 116 and be unable to proceed inwards.

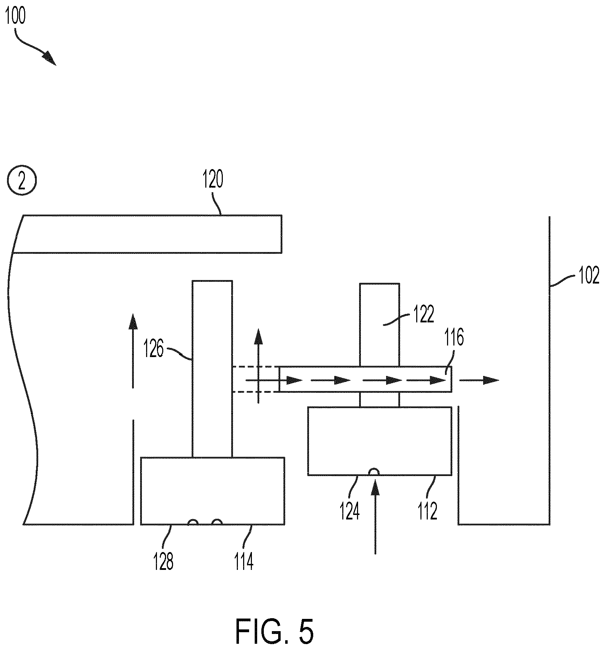

As best seen in FIG. 5, the first button 112 may be pressable to move the blocking slider 116 from the first, locked position into the second, unlocked position. In an example, pressure on the first button 112 inward may move the end of the blocking slider 116 laterally away from the key cap 128 of the second button 114, freeing the second button 114 to be pushable or actuatable inwards towards a door-opening mechanism 120. In an example, the blocking slider 116 may be biased by a biasing element (not shown) into the locked position, where pressing of the first button 112 may push or pull the blocking slider 116 along a track (not shown) against the bias and away from the second button 114.

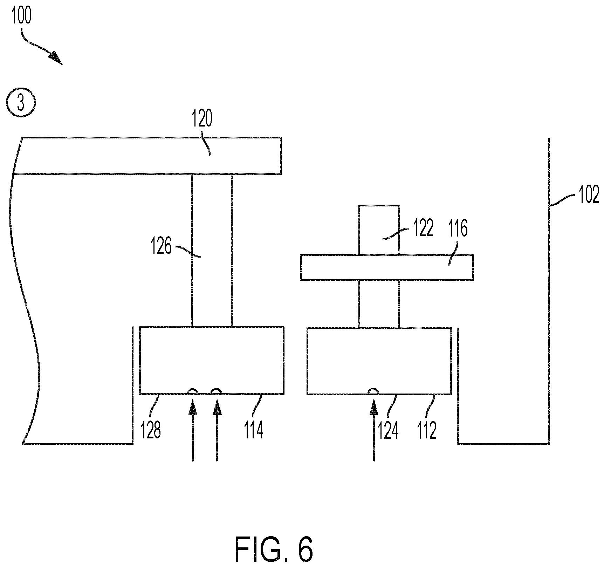

As best seen in FIG. 6, when the blocking slider 116 is in the second, unlocked position, and second button 114 is pressed inwards, the inner end of the elongate shaft 126 comes into contact with and pushes a door-opening mechanism 120 to cause the door 104 of the oven 100 to unlatch and/or open.

Thus, using the two-step door opening mechanism 110, two distinct actions may be required of the user to open the door 104 to the oven cavity 106. To open the oven door 104, the first button 112 is pressed. By pressing the first button 112, the blocking slider 116 is moved to allow the second button 114 to become operable to open the door 104. That is, only while the first button 112 is pressed, the second button 114 may be pressed to contact the door-opening mechanism 120 and open the door 104. The oven door 104 is not opened if both buttons 112, 114 are simultaneously pressed, as the blocking slider 116 may prevent operation of the second button 114 in such a scenario. Additionally, the oven door 104 is not opened if the first button 112 is pressed, released, and then the second button 114 is pressed, as the blocking slider 116 may again revert to the locked position.

Variations on the disclosed two-step door opening mechanism 110 are possible. In one example, one or more of the first button 112 and the second button 114 may be electromechanical in operation. For instance, in one example, pressing the first button 112 may operate a solenoid to electrically move the blocking slider 116 between the locked and unlocked positions. In another example, both the first button 112 and the second button 114 may be electronically controlled, and a processor may be utilized to actuate the door-opening mechanism 120 responsive to a user pressing the first button 112 and then pressing the second button 114 while the first button 112 remains pressed. In yet a further example, each button may be operable by a motor or other drive mechanism to move the sliders between the locked and unlocked positions based on pressed to electronic controls on the face of the oven 100.

Child resistance is offered by the two distinct actions of the two-step door opening mechanism 110. Moreover, ease of actuation is maintained by both first button 112 and the second button 114 being placed on the front face of the oven 100. Thus, the instant disclosure provides the advantage of having child lock capabilities, as well as providing both buttons 112, 114 as being within easy reach for an adult user on the front face of the oven 100.

Accordingly, it is to be understood that the above description is intended to be illustrative and not restrictive. Many embodiments and applications other than the examples provided would be apparent upon reading the above description. The scope should be determined, not with reference to the above description, but should instead be determined with reference to the appended claims, along with the full scope of equivalents to which such claims are entitled. It is anticipated and intended that future developments will occur in the technologies discussed herein, and that the disclosed systems and methods will be incorporated into such future embodiments. In sum, it should be understood that the application is capable of modification and variation.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A two-step door opening mechanism (110) for an oven (100), comprising:
first and second buttons (112, 114), arranged side-by-side on a front panel of the oven (100), the oven (100) defining an oven cavity (106) openable and closable by an oven door (104), the first and second buttons (112, 114) being separately actuatable one after the other for providing two distinct actions to be performed to open the oven door (104),
wherein the first button (112), once actuated, is configured to unlock the second button (114), and the second button (114), once actuated, is configured to open the oven door (104) when the second button (114) is unlocked.

2. The two-step door opening mechanism (110) of claim 1, wherein the first button (112) is marked with a first indication specifying that a first of the two distinct actions is to be performed first to the first button (112), and the second button (114) is marked with a second indication specifying that a second of the two distinct actions is to be performed second to the second button (114).

3. The two-step door opening mechanism (110) of claims 1 or 2, wherein the first of the two distinct actions is pressing the first button (112), and the second of the two distinct actions is pressing the second button (114) while the first button (112) remains pressed.

4. The two-step door opening mechanism (110) of any of claims 1-3, wherein each of the first and second buttons (112, 114) are biased outward into an unpressed position.

5. The two-step door opening mechanism (110) of any of claims 1-4, further comprising a blocking slider (116) configured to slide laterally between a first, locked position in which the blocking slider (116) prevents inward movement of the second button (114) and a second, unlocked position in which the blocking slider (116) allows the inward movement of the second button (114).

6. The two-step door opening mechanism (110) of claim 5, wherein pressing of the first button (112) moves the blocking slider (116) from the first, locked position to the second, unlocked position, and releasing of the first button (112) moves the blocking slider (116) from the second, unlocked position back to the first, locked position.

7. The two-step door opening mechanism (110) of claims 5 or 6, wherein the second button (114) includes:
an elongate shaft (126) extending inwards into the oven (100); and
a key cap (128) at a first end of the elongate shaft (126) facing the exterior of the oven (100),
wherein
when the second button (114) is pressed inwards and the blocking slider (116) is in the second, unlocked position, a second end of the elongate shaft (126) comes into contact with and pushes a door-opening mechanism (120) to cause the oven door (104) of the oven (100) to open.

8. The two-step door opening mechanism (110) of claim 7, wherein
the first button (112) includes an elongate shaft (122) extending inwards into the oven (100), a key cap (124) at a first end of the elongate shaft (122) facing the exterior of the oven (100), and
the blocking slider (116) define an elongate member perpendicular to the elongate shafts (122, 126).

9. The two-step door opening mechanism (110) of claim 7, wherein when the second button (114) is pressed inwards and the blocking slider (116) is in the first, locked position, the blocking slider (116) is located at least partially behind the key cap (128), such that the second button (114) is stopped against the surface of the blocking slider (116) and be unable to proceed inward to come into contact with the door-opening mechanism (120).

10. The two-step door opening mechanism (110) of any of claims 5-9, wherein pressing the first button (112) actuates a solenoid to move the blocking slider (116) from the first, locked position to the second, unlocked position, and releasing the first button (112) releases the solenoid to move the blocking slider (116) from the second, unlocked position back to the first, locked position.

11. The two-step door opening mechanism (110) of any claims 1-10, further comprising a processor programmed actuate a door-opening mechanism (120) to open the oven (100) door (104) responsive to a user pressing the first button (112) and then pressing the second button (114) while the first button (112) remains pressed.

12. An oven (100) comprising the two-step door opening mechanism (110) of any one of claims 1-11.

13. A method for utilizing the two-step door opening mechanism (110) of the oven (100) of any one of claims 1-12, the method comprising:
actuating the first button (112) to unlock the second button (114); and
once unlocked, actuating the second button (114) to open the oven door (104).

14. The method of claim 13, further comprising:
actuating the first button (112) by pressing the first button (112) to slide a blocking slider (116) from a first, locked position into a second, unlocked position, wherein in the first, locked position the blocking slider (116) prevents inward movement of the second button (114) and in the second, unlocked position the blocking slider (116) allows the inward movement of the second button (114).

15. The method of claim 14, further comprising:
actuating the second button (114) by pressing the second button (114) when the blocking slider (116) is in the second, unlocked position, to thereby cause a door-opening mechanism (120) to open the oven door (104).
